# EUROPÄISCHE PATENTANMELDUNG

(11) **EP 1 475 384 A1**
(43) Veröffentlichungstag der Anmeldung: **10.11.2004**
(21) Anmeldenummer: 04010543.9
(22) Anmeldetag: 04.05.2004
(51) Int. Cl.: C07F 9/53, C07F 9/50, C07F 9/42, C07F 7/08, C07B 31/00

(54) **Verfahren zur Herstellung von Phosphorverbindungen**

(30) Priorität: 07.05.2003 DE 10320261
(71) Anmelder: Bayer Chemicals AG, 51368 Leverkusen (DE)
(72) Erfinder: Grützmacher, Hansjörg, Prof. Dr., 8907 Wettswil a. A. (CH); Piras, Elisabetta, 8057 Zürich (CH)

(57) **Zusammenfassung**

Die vorliegende Erfindung betrifft ein Verfahren zur Herstellung von Phosphorverbindungen und Zwischenprodukten.

## Beschreibung

Die vorliegende Erfindung betrifft ein Verfahren zur Herstellung von Phosphorverbindungen und Zwischenprodukten.

Aus Deblon (Dissertation Nr. 13920, ETH Zürich, 2000) und Maire (Dissertation Nr. 14396, ETH Zürich, 2001) ist bekannt, dass Übergangsmetallkomplexe von Olefin-Phosphanverbindungen für homogenkatalytische Reaktionen wie insbesondere Hydrierungen und Hydrosilylierungen besonders geeignet sind.

Üblicherweise erfolgt deren Herstellung unter Verwendung von sekundären Phosphanen (siehe auch Thomaier et al., New. J. Chem. 1998, 947-958 und Deblon et al., New. J. Chem. 2001, 25, 83-92), was für die industrielle Anwendung aufgrund der Selbstentzündlichkeit und den damit verbundenen sicherheitstechnischen Anforderungen unbefriedigend ist.

Es bestand daher das Bedürfnis, ein Verfahren zur Herstellung von Olefin-Phosphanverbindungen zu entwickeln, das ohne den Einsatz von sekundären Phosphanen auskommt.

Überraschenderweise wurde nun ein Verfahren zur Herstellung von Verbindungen der Formel (I) gefunden, 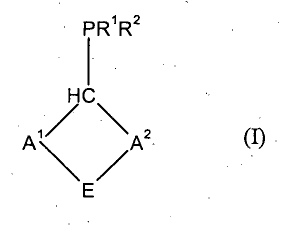 in der
- R¹ und R²: jeweils unabhängig voneinander für einen monovalenten Rest stehen, der jeweils 1 bis 30-Kohlenstoffatome enthält oder
- PR¹R²: als Ganzes für einen 5 bis 9 gliedrigen heterocyclischen Rest steht, der insgesamt 2 bis 50 Kohlenstoffatome enthält und bis zu drei weitere Heteroatome enthalten kann, die ausgewählt sind aus der Gruppe Sauerstoff und Stickstoff und
- A¹ und A²: jeweils unabhängig voneinander für einen subsituierten oder unsubstituierten ortho-Arylen-Rest stehen und
- E: für E¹ oder E² steht, wobei E¹ für einen unsubstituierten, einfach oder zweifach substituierten vicinalen cis-Alkendiyl-Rest und E² für einen vicinalen Alkandiyl-Rest steht, bei dem die beiden -yl-Kohlenstoffatome jeweils ein oder zwei Wasserstoffatome tragen,
das dadurch gekennzeichnet ist, dass
- in einem Schritt a)
   Verbindungen der Formel (II) 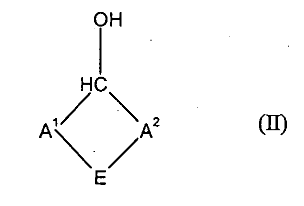 in der A¹, A² und E die vorstehend angegebenen Bedeutung besitzen durch Umsetzung mit Verbindungen der Formel (III)

   R¹R²P-Hal (III)

   in der R¹ und R² die vorstehend angegebene Bedeutung besitzen und
   Hal¹ für Chlor, Brom oder Iod, bevorzugt für Chlor steht
   in Gegenwart von Säure oder Base
   zu Verbindungen der Formel (IV) umgesetzt werden 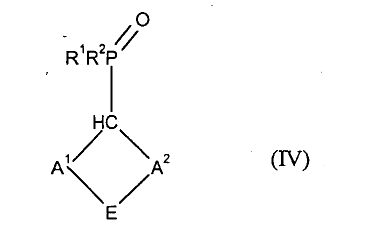 in der A¹, A², E, R¹ und R² die vorstehend angegebene Bedeutung besitzen und
- in einem Schritt b) die Verbindungen der Formel (IV) durch Reduktion in Verbindungen der Formel (I) überführt werden.

Von den Formeln (I) und (IV) sind insbesondere auch chirale Verbindungen umfasst. Diese können in verschiedenen stereoisomeren Formen auftreten, die sich entweder wie Bild und Spiegelbild (Enantiomere), oder die sich nicht wie Bild und Spiegelbild (Diastereomere) verhalten. Das erfindungsgemäße Verfahren ist sowohl für die Herstellung stereoisomerenreiner Formen der jeweiligen Verbindung als auch beliebiger Mischungen der Stereoisomeren wie zum Beispiel für Racemate oder Diastereomerenpaare geeignet.

Die Begriffe stereoisomerenangereichert (enantiomerenangereichert bzw. diastereomerenangereichert) bedeuten im Rahmen der Erfindung stereoisomerenreine (enantiomerenreine bzw. diastereomerenreine) Verbindungen oder Mischungen von Stereoisomeren (Enantiomeren bzw. Diastereomeren), in denen ein Stereoisomeres (Enantiomeres bzw. Diastereomeres) in einem größeren Anteil vorliegt als ein anderes bzw. das andere. Stereoisomerenangereichert bedeutet beispielsweise und bevorzugt einen Gehalt eines Stereoisomeren von 50 % bis 100 Gew.-%, besonders bevorzugt 70 % bis 100 Gew.-% und ganz besonders bevorzugt 90 bis 100 Gew.-%, bezogen auf die Summe der Stereoisomeren.

In einer Ausführungsform des erfindungsgemäßen Verfahrens können im Falle des Vorliegens von Stereoisomerengemischen von Verbindungen der Formel (IV) diese in an sich bekannter Weise getrennt werden.

Bei Diastereomerengemischen kann die Trennung beispielsweise chromatographisch oder durch fraktionierte Kristallisation erfolgen, bei Enantiomerengemischen beispielsweise durch fraktionierte Kristallisation in Gegenwart eines enantiomerenangereicherten Hilfsreagenzes oder durch Chromatographie an einem zumindest enantiomerenangereicherten Säulenmaterial.

In einer weiteren Ausführungsform kann durch die Stabilität der Phosphor-Sauerstoffbindung weiterhin zumindest einer der Reste R¹, R², A¹, A² und E in den Verbindungen der Formel (IV) durch an sich bekannte chemische Transformationen in einen anderen Rest R¹, R², A¹, A² und E überführt werden. An sich bekannte chemische Transformationen sind beispielsweise übliche Transformationen von funktionellen Gruppen oder Funktionalisierungen wie sie in J. March, Advanced Organic Chemistry, Wiley, 1992 beschrieben sind.

Im Rahmen der Erfindung können alle oben stehenden und im Folgenden aufgeführten, allgemeinen oder in Vorzugsbereichen genannten Restedefinitionen, Parameter und Erläuterungen untereinander, also auch zwischen den jeweiligen Bereichen und Vorzugsbereichen in beliebiger Weise kombiniert werden.

Aryl als Substituent steht im Rahmen der Erfindung beispielsweise für carbocyclische aromatische Reste mit 6 bis 24 Gerüstkohlenstoffatome wie vorzugsweise Phenyl, Naphtyl, Phenanthrenyl und Anthracenyl, oder für heteroaromatische Reste mit 5 bis 24 Gerüstkohlenstoffatome, in denen keines, ein, zwei oder drei Gerüstkohlenstoffatome pro Cyclus, im gesamten Molekül mindestens jedoch ein Gerüstkohlenstoffatome durch Heteroatome substituiert sind, die ausgewählt sind aus der Gruppe Stickstoff, Schwefel oder Sauerstoff wie vorzugsweise Pyridinyl, Oxazolyl, Thiophenyl, Benzofuranyl, Benzothiophenyl, Dibenzofuranyl, Dibenzothiophenyl, Furanyl, Indolyl, Pyridazinyl, Pyrazinyl, Imidazolyl, Pyrimidinyl und Chinolinyl. Im Rahmen der Erfindung beziehen sich dabei Angaben wie z.B. C₅ im Falle von Arylresten auf die Summe der Kohlenstoffatome und Heteroatome des aromatischen Gerüsts.

Weiterhin können die carbocyclischen aromatischen Reste oder heteroaromatischen Reste mit bis zu fünf gleichen oder verschiedenen Substituenten pro Cyclus substituiert sein. Beispielsweise und bevorzugt sind die Substituenten ausgewählt aus der Gruppe Brom, Fluor, Chlor, Nitro, Cyano, freies oder geschütztes Formyl, freies oder geschütztes Hydroxy, C₁-C₁₂-Alkyl, C₁-C₁₂-Halogenalkyl, C₁-C₁₂-Alkoxy, C₁-C₁₂-Halogenalkoxy, C₅-C₁₄-Aryl wie zum Beispiel Phenyl, C₆-C₁₅-Arylalkyl wie zum Beispiel Benzyl, Di(C₁-C₁₂-alkyl)-amino, (C₁-C₁₂-Alkyl)-amino, CO(C₁-C₁₂-Alkyl), OCO(C₁-C₁₂-Alkyl), NHCO(C₁-C₁₂-Alkyl), N(C₁-C₆-Alkyl)CO(C₁-C₁₂-Alkyl), CO(C₅-C₁₄-Aryl), OCO(C₅-C₁₄-Aryl), NHCO(C₅-C₁₄-Aryl), N(C₁-C₆-Alkyl)CO(C₅-C₁₄-Aryl), COO-(C₁-C₁₂-Alkyl), COO-(C₅-C₁₄-Aryl), CON(C₁-C₁₂-Alkyl)₂ oder CONH(C₁-C₁₂-Alkyl), CO₂M, CONH₂, SO₂NH₂, SO₂N(C₁-C₁₂-Alkyl)₂, SO₃M wobei M jeweils für gegebenenfalls substituiertes Ammonium, Lithium, Natrium, Kalium oder Cäsium steht.

Beispielsweise und bevorzugt steht Aryl für Phenyl, Näphthyl, Pyridinyl und Chinolyl, das mit keinem, einem, zwei oder drei Resten pro Cyclus weiter substituiert sein kann mit Resten die ausgewählt sind aus der Gruppe Fluor, Chlor, Cyano, C₁-C₈-Alkyl, C₁-C₆-Perfluoralkyl, C₁-C₆-Alkoxy, Phenyl, Benzyl, Di(C₁-C₁₂-alkyl)-amino, CO(C₁-C₁₂-Alkyl), COO-(C₁-C₁₂-Alkyl), CON(C₁-C₁₂-Alkyl)₂ oder SO₂N(C₁-C₁₂-Alkyl)₂.

Besonders bevorzugt steht Aryl für Phenyl oder Naphthyl, das mit keinem, einem, zwei oder drei Resten pro Cyclus weiter substituiert sein kann mit Resten die ausgewählt sind aus der Gruppe Fluor, Chlor, Cyano, C₁-C₆-Alkyl, C₁-C₆-Perfluoralkyl, C₁-C₈-Alkoxy, Phenyl oder SO₂N(C₁-C₁₂-Alkyl)₂.

Analog gelten die Definition und die Vorzugsbereiche im Rahmen der Erfindung auch für Aryloxy-Substituenten und den Arylteil eines Arylalkyl-Restes.

**Geschütztes Formyl** bedeutet einen Formyl-Rest, der durch Überführung in ein Aminal, Acetal oder ein gemischtes Aminalacetal geschützt ist, wobei die Aminale, Acetale und gemischten Aminalacetale acyclisch oder cyclisch sein können.

Beispielsweise und bevorzugt steht geschütztes Formyl für einen 1,1-(2,4-Dioxycyclopentandiyl)-Rest.

**Geschütztes Hydroxy** bedeutet einen Hydroxy-Rest, der durch Überführung in ein Ketal, Acetal oder ein gemischtes Aminalacetal geschützt ist, wobei die Acetale und gemischten Aminalacetale acyclisch oder cyclisch sein können.

Beispielsweise und bevorzugt steht geschütztes Hydroxy für einen Tetrahydropyranyl-Rest (THP).

**Alkyl** bzw. **Alkylen**, bzw. **Alkoxy** bzw. **Alkenyl**, steht im Rahmen der Erfindung jeweils unabhängig einen geradkettigen, cyclischen, verzweigten oder unverzweigten Alkyl- bzw. Alkylen- bzw. Alkenyl- bzw. Alkoxy-Rest, der gegebenenfalls durch C₁-C₄-Alkoxy in der Art weiter substituiert sein kann, dass jedes Kohlenstoffatom des Alkyl- bzw. Alkylen-, bzw. Alkoxy bzw. Alkenyl-Restes höchstens ein Heteroatom ausgewählt aus der Gruppe Sauerstoff, Stickstoff oder Schwefel trägt.

Gleiches gilt für den Alkylenteil eines **Arylalkyl**-Restes.

Beispielsweise steht im Rahmen der Erfindung C₁-C₆-Alkyl für Methyl, Ethyl, 2-Ethoxyethyl, n-Propyl, Isopropyl, n-Butyl, tert.-Butyl, n-Pentyl, Cyclohexyl und n-Hexyl, C₁-C₈-Alkyl- darüber hinaus beispielsweise für n-Heptyl, n-Octyl oder iso-Octyl, C₁-C₁₂-Alkyl, weiter darüber hinaus z.B. für Norbomyl, Adamantyl, n-Decyl und n-Dodecyl und C₁-C₁₈-Alkyl noch weiter darüber hinaus für n-Hexadecyl und n-Octadecyl.

Beispielsweise steht im Rahmen der Erfindung C₁-C₄-Alkylen für Methylen, 1,1-Ethylen, 1,2-Ethylen, 1,1-Propylen, 1,2-Propylen, 1,3-Propylen, 1,1-Butylen, 1,2-Butylen, 2,3-Butylen und 1,4-Butylen, C₁-C₈-Alkylen darüber hinaus für 1,5-Pentylen, 1,6-Hexylen, 1,1-Cyclohexylen, 1,4-Cyclohexylen, 1,2-Cyclohexylen und 1,8-Octylen.

Beispielsweise steht im Rahmen der Erfindung C₁-C₄-Alkoxy für Methoxy, Ethoxy, Isopropoxy, n-Propoxy, n-Butoxy und tert.-Butoxy, C₁-C₈-Alkoxy darüber hinaus für Cyclohexyloxy.

Beispielsweise steht im Rahmen der Erfindung C₂-C₈-Alkenyl für Allyl, 3-Propenyl und 4-Butenyl.

**Halogenalkyl** bzw. **Halogenalkoxy,** steht im Rahmen der Erfindung jeweils unabhängig einen geradkettigen, cyclischen, verzweigten oder unverzweigten Alkyl- bzw. Alkoxy-Rest, der durch Halogenatome einfach, mehrfach oder vollständig substituiert ist. Reste die vollständig durch Fluor substituiert sind, werden mit **Perfluoralkyl** bzw. **Perfluoralkoxy** bezeichnet.

Beispielsweise steht im Rahmen der Erfindung C₁-C₆-Halogenalkyl für Trifluormethyl, 2,2,2-Trifluorethyl, Chlormethyl, Fluormethyl, Brommethyl, 2-Bromethyl, 2-Chlorethyl, Nonafluorbutyl, C₁-C₈-Halogenalkyl darüber hinaus beispielsweise für n-Perfluoroctyl, C₁-C₁₂-Halogenalkyl, weiter darüber hinaus z.B. für n-Perfluordodecyl.

Beispielsweise steht im Rahmen der Erfindung C₁-C₄-Halogenalkoxy für Trifluormethoxy, 2,2,2-Trifluorethoxy, 2-Chlorethoxy, Heptafluorisopropoxy, C₁-C₈-Halogenalkoxy darüber hinaus für n-Perfluoroctyloxy.

Im Folgenden werden die bevorzugten Substitutionsmuster definiert:
- R¹ und R²: stehen bevorzugt jeweils unabhängig voneinander für C₁-C₁₈-Alkyl, C₃-C₁₂-, Alkenyl, C₁-C₁₈-Perfluoralkyl, C₁-C₁₈-Perfluoralkoxy, C₁-C₁₈-Alkoxy, C₅-C₂₄- Aryl, C₅-C₂₄-Aryloxy, C₅-C₂₅-Arylalkyl, C₅-C₂₅-Arylalkoxy oder NR⁴R⁵, wobei R⁴ und R⁵ jeweils unabhängig voneinander für C₁-C₁₂-Alkyl, C₅-C₁₄-Aryl oder C₆-C₁₅-Arylalkyl oder NR⁴R⁵ als Ganzes für einen 5 bis 7 gliedrigen cyclischen Aminorest mit insgesamt 4 bis 12 Kohlenstoffatomen steht oder
- PR¹R²: als Ganzes für einen 5- bis 7-gliedrigen heterocyclischen Rest der Formel (V), 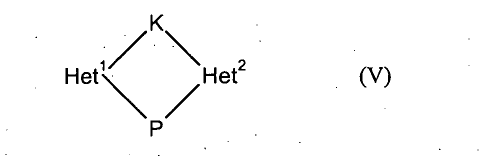
in der
- Het¹: und Het² jeweils unabhängig voneinander fehlen, für Sauerstoff oder NR⁵ stehen, wobei R⁵ für C₁-C₁₂-Alkyl, C₅-C₁₄-Aryl oder C₆-C₁₅-Arylalkyl steht und
- K: für einen Alkandiylrest mit 2 bis 25 Kohlenstoffatomen, einen divalenten Aryl-Alkyl-Rest mit 5 bis 15 Kohlenstoffatomen, einen Arylen-Rest mit insgesamt 5 bis 14 Kohlenstoffatomen oder einen 2,2'-(1,1'-Bisarylen)-Rest mit insgesamt 10 bis 30 Kohlenstoffatomen steht.
- R¹ und R²: stehen besonders bevorzugt jeweils unabhängig voneinander für C₁-C₁₂-Alkyl, C₅-C₁₄-Aryl, C₆-C₂₅-Arylalkyl oder Reste der Formel (V), in der Het¹ und Het² jeweils identisch fehlen oder jeweils unabhängig voneinander für Sauerstoff oder Stickstoff stehen und
- K: für einen C₁-C₈-Alkylen-Rest oder einen 2,2'-(1,1'-Bisphenylen)-2,2'-(1,1'-Bis-naphthylen)Rest steht, der pro Cyclus mit bis zu zwei Substituenten ausgewählt aus der Gruppe Fluor, Chlor, C₁-C₄-Alkyl oder C₁-C₄-Alkoxy weiter substituiert sind.
- R¹ und R²: stehen ganz besonders bevorzugt jeweils unabhängig voneinander und noch weiter bevorzugt jeweils identisch für Methyl, Ethyl, n-Propyl, Isopropyl, tert.-Butyl, Cyclohexyl, Benzyl, o-, m-, p-Tolyl, 2,6-Dimethylphenyl, 3,5-Di-tert.-butylphenyl, p-Trifluormethylphenyl, 3,5-Bis(trifluormethylphenyl), p-tert.-Butylphenyl, o-, m-, p-Anisyl, 2,6-Dimethoxyphenyl, o-, m-, p-Dimethylaminophenyl, 2-, 3-, 4-Pyridyl, 2-Furanyl, 2-Pyrrolyl oder Reste der (IV) in der entweder
Het¹ und Het² jeweils fehlen und
K für einen C₁-C₈-Alkylen-Rest steht oder
Het¹-K-Het² als Ganzes für einen 2,2-Dioxy-(1,1-binaphthyl)-Rest oder einen zumindest in den 6,6'-Positionen disubstituierten, höchstens jedoch pro Cyclus zweifach substituierten 2,2'-Dibxy-(1,1'-Biphenyl)-Rest steht, wobei die Substituenten ausgewählt sind aus der Gruppe Fluor, Chlor, C₁-C₄-Alkyl oder C₁-C₄-Alkoxy.
- PR¹R²: steht am meisten bevorzugt steht als Ganzes für Diisopropylphosphino, Di-tert.-butylphosphino, Dicyclohexylphosphino, Diphenylphosphino, Bis(o-, m-, p-tolyl)phosphino, Di-(3,5-bis(trifluormethylphenyl)phosphino, Di-(o-anisyl)phosphino, Di-(2-pyridyl)phosphino, (R,R)-2,5-Dimethylphospholano, oder (S,S)-2,5-Dimethylphospholano.
- A¹ und A²: stehen bevorzugt jeweils unabhängig voneinander für einen ortho-Phenylen-Rest der (VI), 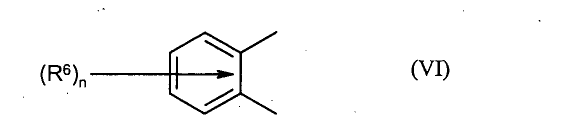
in der
- n: für 0, 1, 2, 3 oder 4 bevorzugt 0, 1 oder 2 und besonders bevorzugt 0 oder 1 steht und
- R⁶: jeweils unabhängig ausgewählt ist aus der Gruppe Fluor, Chlor, Brom, Iod, Nitro, freies oder geschütztes Formyl, C₁-C₁₂-Alkyl, C₁-C₁₂-Alkoxy, C₁-C₁₂-Halogenalkoxy, C₁-C₁₂-Halogenalkyl, C₅-C₁₄-Aryl, C₆-C₁₅-Arylalkyl oder Resten der Formel (VII),

L-Q-T-W (VII)

in der unabhängig voneinander
L fehlt oder für -C₁-C₈-Alkylen oder C₂-C₈-Alkenylen steht und
Q fehlt oder für Sauerstoff, Schwefel oder NR⁷ steht,
wobei
R⁷ Wasserstoff, C₁-C₈-Alkyl, C₆-C₁₅-Arylalkyl oder C₅-C₁₄-Aryl bedeutet und
T für eine Carbonyl-Gruppe steht und
W für R⁸, OR⁸, NHR⁹ oder N(R⁹)₂ steht, wobei
R⁸ für C₁-C₈-Alkyl, C₅-C₁₅-Arylalkyl oder C₅-C₁₄-Aryl und
R⁹ jeweils unabhängig für C₁-C₈-Alkyl, C₅-C₁₄-Arylalkyl oder C₄-C₁₅-Aryl oder N(R⁹)₂ zusammen für einen 5 oder 6 gliedrigen cyclischen Aminorest steht
oder Resten der Formeln (VIIIa-g)

| | |
|---|---|
| L-W (VIIIa) | L-SO₂-W (VIIIb) |
| L-NR¹²SO₂R¹² (VIIIc) | L-SO₃Z (VIIId) |
| L-PO₃Z₂ (VIIIe) | L-COZ (VIIIf) |
| L-CN (VIIIg) | |

in denen L, Q, W und R⁸ die unter der Formel (VII) angegebene Bedeutung besitzen und Z für Wasserstoff oder M¹ steht, wobei M' die unter der Definition von R⁷ angegebene Bedeutung besitzt.

A¹ und A² stehen besonders bevorzugt jeweils unabhängig voneinander, ganz besonders bevorzugt identisch für einen ortho-Phenylen-Rest der Formel (VI) in der
- n: für 0 oder 1 steht und
- R⁶: jeweils unabhängig ausgewählt ist aus der Gruppe Fluor, Chlor, Brom, Iod, Cyano, C₁-C₄-Alkyl, C₁-C₄-Alkoxy, Di-(C₁-C₄-alkyl)amino, (C₁-C₄-Alkyl)amino, C₁-C₄-Alkylthio, CO₂M¹, CONH₂, SONH₂, SO₂N(C₁-C₄-Alkyl)₂, SO₃M¹ wobei M¹ jeweils für Lithium, Natrium oder Kalium steht.
A¹ und A² stehen noch weiter bevorzugt identisch für einen ortho-Phenylen-Rest der Formel (VI) in der
- n: für 0 oder 1 steht und
- R⁶: ausgewählt ist aus der Gruppe Fluor, Chlor, Cyano, Methyl, Ethyl, Methoxy, Ethoxy, Methylthio, Dimethylamino, CONH₂, SO₂N(Methyl)₂ oder SO₂N(Ethyl)₂, wobei für n = 1 R⁶ noch weiter bevorzugt in para-Position zu E angeordnet ist.
A¹ und A² stehen am meisten bevorzugt jeweils identisch für ortho-Phenylen.
E¹ steht bevorzugt für Reste der Formel (IXa), 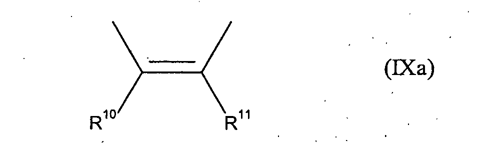 in der
- R¹⁰ und R¹¹: jeweils unabhängig voneinander für Wasserstoff, Cyano, Fluor, Chlor, Brom, Iod, C₁-C₁₈-Alkyl, C₄-C₂₄-Aryl, C₅-C₂₅-Arylalkyl, CO₂M, CONH₂, SO₂N(R¹²)₂, SO₃M¹ wobei R¹² jeweils unabhängig die nachfolgend definierte Bedeutung besitzt oder für Reste der Formel (X) steht,

T²-Het³-R¹³ (X)

in der
T² fehlt oder für Carbonyl,
Het³ für Sauerstoff oder NR¹², wobei R¹² für Wasserstoff, C₁-C₁₂-Alkyl, C₅-C₁₄-Aryl oder C₆-C₁₅-Arylalkyl steht und
R¹³ für C₁-C₁₈-Alkyl, C₅-C₂₄-Aryl oder C₅-C₂₅-Arylalkyl steht.
- E²: steht bevorzugt für Reste der Formel (IXb), 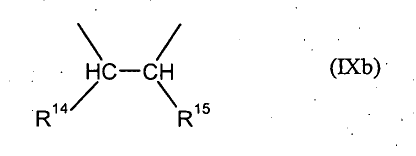
in der
- R¹⁴ und R¹⁵: jeweils unabhängig voneinander für Wasserstoff, C₁-C₁₈-Alkyl, C₅-C₂₄-Aryl oder C₅-C₂₅-Arylalkyl stehen.

Bevorzugt steht E für E¹.

Besonders bevorzugt steht E¹ für Reste der Formel (IXa) in der einer der beiden Reste R¹⁰ und R¹¹ für Wasserstoff und der andere Rest ausgewählt ist aus der Gruppe Wasserstoff, Cyano, Fluor, C₁-C₁₂-Alkyl, Phenyl, C₁-C₁₈-Alkoxy oder C₅-C₁₅-Arylalkoxy, wobei C₁-C₁₈-Alkoxy bzw. C₅-C₁₅-Arylalkoxy vorzugsweise chiral sind.

Ganz besonders bevorzugt steht einer der beiden Reste R¹⁰ und R¹¹ für Wasserstoff und der andere Rest ist ausgewählt aus der Gruppe Wasserstoff, Cyano, Fluor, Phenyl, Methoxy, oder Menthoxy, wobei von den 8 Isomeren (-)-Menthoxy bevorzugt ist.

Das erfindungsgemäße Verfahren ist insbesondere zur Herstellung der folgenden Verbindungen geeignet:

10-Cyano-5-diphenylphosphanyl-5*H* dibenzo[a,d]cyclohepten (^{CN}tropp^{Ph}), 5-(2S,5S-2,5-dimethylphospholanyl)-5*H* dibenzo[a,d]cyclohepten (S,S-tropphos^{Me}), 5-(2R,5R-2,5-dimethyl-phospholanyl)-5*H*-dibenzo[a,d]cyclohepten (R,R-tropphos^{Me}), (10-Methoxy-*5H*-dibenzo[a,d]cyclohepten-5-yl)-diphenylphosphan (^{Meo}tropp^{Ph}), (10-Methoxy-*5H*-dibenzo[a,d]cyclohepten-5-yl)-dicyclohexylphosphan (^{Meo}tropp^{Cyc}), [(5S)-10-[(-)-Menthyloxy]-*5H*-dibenzo[a,d]cyclohepten-5-yl]-diphenylphosphan, (S-^{Menthyloxy}tropp^{Ph}) und [(5R)-10-[(-)-Menthyloxy]-*5H*-dibenzo[a,d]cyclohepten-5-yl]-diphenyl-phosphan (R-^{Menthyloxy}tropp^{Ph}).

Gemäß Schritt a) des erfindungsgemäßen Verfahrens werden die Verbindungen der Formel (II) mit Verbindungen der Formel (III) in Gegenwart von Säure oder Base zu Verbindungen der Formel (IV) umgesetzt.

Die Reaktion kann gegebenenfalls und bevorzugt in Gegenwart von organischem Lösungsmittel durchgeführt werden, sofern die Lösungsmittel gegen die jeweils eingesetzte Säure oder Base zumindest im Wesentlichen inert sind.

Als organische Lösungsmittel sind beispielsweise geeignet:

Aliphatische oder aromatische, gegebenenfalls halogenierte Kohlenwasserstoffe, wie beispielsweise verschiedene Benzine, Benzol, Toluol, Xylol, Chlorbenzol, Dichlorbenzol, verschiedene Petrolether, Hexan, Cyclohexan, Dichlormethan, Chloroform, Tetrachlorkohlenstoff; Ether, wie Diethylether, Methyl-tert.-butylether, Diisopropylether, Dioxan, Tetrahydrofuran oder Ethylenglykoldimethyl- oder -diethylether; Amide, wie N,N-Dimethylformamid, N,N-Dimethylacetamid, N-Methyl-formanilid, N-Methyl-pyrrolidon, N-Methylcaprolactam oder Hexamethylphosphorsäuretriamid; Sulfoxide, wie Dimethylsulfoxid, Sulfone wie Tetramethylensulfon, Alkohole, wie Methanol, Ethanol, n- oder i-Propanol, Ethylenglykolmonomethylether, Ethylenglykolmonoethylether, Diethylenglykolmonomethylether, Diethylenglykolmonoethylether, oder Gemische solcher organischen Lösungsmittel. Bevorzugte organische Lösungsmittel sind Ether.

Als Basen sind beispielsweise geeignet: Erdalkali- oder Alkalimetallhydride, -hydroxide, -amide, -alkoholate, oder -carbonate wie beispielsweise Natriumhydrid, Natriumamid, Lithium-diethylamid, Natriummethylat, Natriumethylat, Kalium-tert.-butylat, Natriumhydroxid, Kaliumhydroxid, Natriumcarbonat und Kaliumcarbonat, Lithium-organische Verbindungen, wie beispielsweise n-Butyllithium oder Methyllithium, tertiäre Amine, wie Trimethylamin, Triethylamin, Tributylamin, Trioctylamin, Di-isopropyl-ethylamin, Tetramethylguanidin, N,N-Dimethylanilin, Diazabicyclooctan (DABCO), Diazabicyclononen (DBN) oder Diazabicycloundecen (DBU), Piperidin und N-Methylpiperidin und N-Heteroaromaten wie beispielsweise Pyridin und N,N-Dimethylaminopyridin.

Bevorzugte Basen sind tertiäre Amine, in denen die Reste jeweils unabhängig ausgewählt sind aus der Gruppe C₁-C₁₂-Alkyl, wie beispielsweise Trimethylamin, Triethylamin, Tributylamin und Trioctylamin, wobei solche tertiäre Amine noch weiter bevorzugt sind, die bei den gewählten Reaktionsbedingungen flüssig sind.

Vorzugsweise werden für das erfindungsgemäße Verfahren Säuren eingesetzt.

Bevorzugte Säuren sind solche, die bezogen auf eine wässrige Bezugsskala und 25°C einen pKs-Wert von 5,5 oder weniger besitzen.

Dies sind beispielsweise (C₁-C₁₂-Alkyl)carbonsäuren, (C₁-C₁₂-Halogenalkyl)carbonsäuren, (C₁-C₁₂-Halogenalkyl)sulfonsäuren, (C₁-C₁₂-Alkyl)sulfonsäuren, (C₅-C₁₄-Aryl)sulfonsäuren, Chlorwasserstoff, Bromwasserstoff und Iodwasserstoff, gegebenenfalls gelöst in Essigsäure, Schwefelsäure, ortho- und Polyphosphorsäuren, Hexafluorophosphorsäure und Tetrafluoroborsäure.

Besonders bevorzugt sind (C₁-C₁₂-Halogenalkyl)carbonsäuren, wie insbesondere Trifluoressigsäure.

Die Reaktion in Schritt a) kann beispielsweise bei einer Temperatur von -20°C bis 100°C, bevorzugt bei 0 bis 80°C und besonders bevorzugt bei Umgebungstemperatur durchgeführt werden.

Der Reaktionsdruck kann beispielsweise 0,5 bis 100 bar betragen, bevorzugt 0,9 bis 5 bar. Besonders bevorzugt ist Umgebungsdruck.

Beispielsweise und bevorzugt kann man Säure und Verbindung der Formel (II) in einem organischen Lösungsmittel vorlegen und die Verbindung der Formel (III) zugeben.

Gemäß Schritt b) des erfindungsgemäßen Verfahrens erfolgt die Reduktion von Verbindungen der Formel (IV).

Vorzugsweise erfolgt diese Reduktion in Gegenwart von Siliziumwasserstoffverbindungen. Bevorzugte Siliziumwasserstoffverbindungen sind Polymethylhydrosiloxan (PHMS) oder solche der Formel (XI),

(R¹⁶)_{P}SiH₄₋ₚ (XI)

in der
- p: für 0, 1, 2 oder 3 steht und
- R¹⁶: jeweils unabhängig für C₁-C₈-Alkyl, C₁-C₈-Alkoxy, C₅-C₁₄-Aryl oder Chlor stehen, wobei Trichlorsilan noch weiter bevorzugt ist.

Vorzugsweise wird die Reaktion in Gegenwart von Lösungsmittel durchgeführt.

Bevorzugte Lösungsmittel sind aliphatische oder aromatische, gegebenenfalls halogenierte Kohlenwasserstoffe, wie beispielsweise verschiedene Benzine, Benzol, Toluol, Xylol, Chlorbenzol, Dichlorbenzol, verschiedene Petrolether, Hexan, Cyclohexan, Dichlormethan, Chloroform, Tetrachlorkohlenstoff oder Mischungen davon.

Die Reaktion in Schritt b) kann beispielsweise bei einer Temperatur von 20°C bis 200°C, bevorzugt 50 bis 150°C und besonders bevorzugt bei 100 bis 150°C durchgeführt werden.

Der Reaktionsdruck kann beispielsweise 0,5 bis 100 bar betragen, bevorzugt bis 0,9 bis 5 bar. Besonders bevorzugt ist Umgebungsdruck.

Beispielsweise und bevorzugt kann man die Siliziumwasserstoffverbindung und die Verbindung der Formel (IV) in einem organischen Lösungsmittel bei Raumtemperatur vorlegen und die Reaktionsmischung dann bei Umgebungsdruck auf den Siedepunkt des eingesetzten Lösungsmittels erwärmen.

In einem weiteren Aspekt betrifft die Erfindung Verbindungen der Formel (IVa) sowie ein Verfahren zur Herstellung von Verbindungen der Formel (IVa) 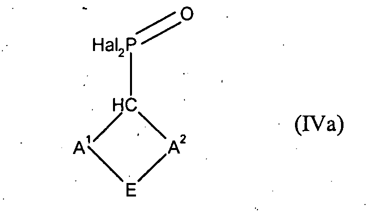
- in der A¹, A² und E: die unter der Formel (I) genannten Bedeutungen einschließlich deren Vorzugsbereiche besitzen und
- Hal: jeweils unabhängig für Chlor, Brom oder Iod, bevorzugt identisch für Chlor oder Brom und besonders bevorzugt identisch für Chlor stehen,
das dadurch gekennzeichnet ist, dass Verbindungen der Formel (II) mit der vorstehend genannten Bedeutung in Gegenwart von Säure oder Base mit Verbindungen der Formel (IIIa) umgesetzt werden,

PHal₃ (IIIa)

in der

Hal jeweils unabhängig für Chlor, Brom oder Iod, bevorzugt identisch für Chlor oder Brom und besonders bevorzugt identisch für Chlor stehen.

Alle für Schritt a) oben gemachten Angaben gelten hierbei entsprechend.

Als Verbindungen der Formel (IVa) seien genannt:
5-Dichloroxyphosphoryl-5*H*-dibenzo[a,d]cyclohepten (troppo^{Cl}) und 5-Dibromoxyphosphoryl-5*H*-dibenzo[a,d]cyclohepten (troppo^{Br})

Die Verbindungen der Formel (IVa) sind wertvolle Zwischenprodukte und lassen sich beispielsweise durch Umsetzung mit Verbindungen der Formeln (XII)

R^{1/2}-M (XII)

in der R¹ bzw. R² die vorstehend angegebene Bedeutung einschließlich der genannten Vorzugsbereiche besitzen und M für den Fall, dass

R¹ bzw. R² über ein Sauerstoffatom an das Phosphoratom gebunden werden sollen
für Wasserstoff oder 1/n Äquivalente eines Metalls oder eines Metallfragments mit der Wertigkeit n und für den Fall, dass
R¹ bzw. R² über ein Stickstoffatom an das Phosphoratom gebunden werden sollen
für Wasserstoff und für den Fall, dass
R¹ bzw. R² über ein Kohlenstoffatom an das Phosphoratom gebunden werden sollen für 1/n. Äquivalente eines Metalls oder eines Metallfragments mit der Wertigkeit n steht, wobei das Gleiche in analoger Weise für Reste gilt, in denen R¹R² als Ganzes für einen divalenten Rest steht, herstellen.

Bevorzugte Metalle sind Alkali-, Erdalkali- oder Übergangsmetalle, wie beispielsweise Lithium, Kalium, Natrium, Magnesium, Zink oder Kupfer, wobei Lithium, Magnesium und Zink besonders bevorzugt sind.

Bevorzugte Metallfragmente sind monovalente Halometallfragmente wie beispielsweise MgCl, MgBr, MgI, ZnCl, ZnBr und ZnI.

Die aus diese Weise erhaltenen Verbindungen, die sich unter die Formel (IV) subsumieren lassen, können dann gemäß Schritt b) ebenfalls zu den freien Phosphanen der Formel (I) reduziert werden.

Die erfindungsgemäß herstellbaren Verbindungen der Formel (I) eignen sich insbesondere als Liganden für Metalle und zur Anwendung in katalytischen Prozessen. Bevorzugte katalytische Prozesse sind Hydrierungen und Hydrosilylierungen.

Die erfindungsgemäß herstellbaren Verbindungen der Formel (IV) und (IVa) eignen sich insbesondere zur Anwendung in einem Verfahren zur Herstellung von Liganden und Katalysatoren.

Der Vorteil der vorliegenden Erfindung liegt darin, dass unter Verwendung von einfach erhältlichen und gefahrlos handhabbaren Verbindungen Olefin-Phosphorverbindungen in hohen Ausbeuten hergestellt werden können.

### Beispiele

### Beispiel 1: Synthese von 5-Diphenyl-oxophosphoranyl-dibenzo[a,d]cyclohepten (troppo^{ph})

In einem 500 mL Reaktionsgefäß werden 14 g Dibenzo[a,d]cyclohepten-5-ol (0.067 mol) in 250 ml THF gelöst. Anschließend werden 11,1 mL Trifluoressigsäure (0,144 mol) zugegeben und anschließend 25.84 mL Diphenylchlorphosphan (0,144 mol) zugegeben. Es bildet sich ein weißer Niederschlag. Man lässt die Reaktionsmischung 30 Minuten bei Raumtemperatur rühren. Anschließend wird die Reaktionsmischung mit K₂CO₃ Lösung neutralisiert. Die organische Phase wird abgetrennt, die Rückstände dreimal mit je 100 mL Methylenchlorid und einmal mit 100 mL Et₂O gewaschen. Die vereinigten organischen Phasen werden über Na₂SO₄ getrocknet und anschließend die Lösungsmittel entfernt. Der Rückstand wird aus CH₂Cl₂/n-Hexan umkristallisiert und 18.38 g (Ausbeute 70 %) eines farblosen kristallinen Feststoffs erhalten.
³¹P-NMR (CDCl₃, 121 MHz): δ 29.28
¹H-NMR (CDCl₃, 300 MHz): δ 4.93 [d, ²J(PH) = 16 Hz, 1H, PCH_{benzyl}), 6.56 (s, 2H, H_{olefin}), 7.59-7.17 (m, 19H, Hₐᵣₒₘ).

### Beispiel 2: Synthese von 5-Diphenylphosphanyl-dibenzo[a,d]cyclohepten (tropp^{ph})

In einem 100 mL Reaktionsgefäß mit Rückflusskühler werden 1 g troppo^{Ph} aus Beispiel 1 (2.7 mmol) in 50 mL Toluen gelöst und mit 2.6 mL HSiCl₃ versetzt. Die Reaktionsmischung wird 8 h auf 120°C erhitzt. Der Fortgang der Reaktion wird durch ³¹P-NMR Spektroskopie verfolgt. Die Reaktionsmischung wird auf 0°C gekühlt und 30 mL einer deoxygenierten 20 %-NaOH Lösung zugetropft. Anschließend wird die organische Phase getrennt und über Na₂SO₄ getrocknet. Nach dem Abdampfen der Lösungsmittel im Vakuum erhält man 0,88 g (Ausbeute 93 %) reines troppPh.
³¹P-NMR (CDCl₃, 101 MHz): δ -14.2 (s).
¹H-NMR (CDCl₃, 250 MHz): δ 4.93 (d, ²J(PH) = 5.5 Hz, 2H, PCH_{benzyl}), 7.20-6.87 (m, 15H, Hₐᵣₒₘ), 7.25 (s, 2H, H_{olefin}), 7.44-7.41 (m, 3H, Hₐᵣₒₘ).

### Beispiel 3: Synthese von 5-Diphenyloxophosphoranyl-10-phenyl-dibenzo-[a,d]-cyclohepten (^{ph}troppo^{ph})

520 mg 5-Hydroxy-10-phenyl-dibenzo[a,d]cyclohepten (1,8 mmol) in 15 mL CH₂Cl₂ werden mit 0,15 mL CF₃COOH (1,13 mmol) versetzt. Die Lösung färbt sich rot und es werden 0,33 mL Chlorodiphenylphosphan (2,26 mmol) zugegeben. Zu der Reaktionsmischung gibt man anschließend nochmals 0,15 mL CF₃COOH (1,13 mmol). Es entsteht eine klare gelbe Lösung, die 2 h bei Raumtemperatur gerührt wird. Anschließend werden 20 mL Na₂CO₃ (18% in H₂O) zugegeben. Die organische Phase wird abgetrennt und die wässrige jeweils 3 x mit 20 mL CH₂Cl₂ extrahiert. Die vereinigten organischen Phasen werden über MgSO₄ getrocknet und nachfolgend das Lösungsmittel verdampft. Es entsteht ein weißer Schaum, der spektroskopisch reines Produkt enthält (660 mg, 80 %).
³¹P NMR: 27,3 ppm - ¹H NMR: 5,15 (d, ²JPH = 13 Hz, 1 H , CHP), 6,50 (s, 1 H, = CH), 7,0-7,9 (m, 23 H, Hₐᵣₒₘ).

### Beispiel 4: Synthese von 5-Diphenylphosphanyl-10-phenyl-dibenzo[a,d]-cyclo-hepten (^{Ph}tropp^{ph})

660 mg 5-Diphenyloxophosphoranyl-10-phenyl-dibenzo[a,d]cyclohepten (1,44 mmol) werden in 20 mL Toluol gelöst und 1,8 mL SiHCl₃ zugegeben. Die Reaktionsmischung wird 10 h unter Rückfluss auf 120°C erhitzt. Nach Abkühlen werden 25 mL 20 % deoxygenierte KOH unter Kühlung zugegeben. Die organische Phase wird abgetrennt und über MgSO₄ getrocknet. Nach Abziehen aller flüchtigen Komponenten erhält man einen gelben, unter UV-Licht stark fluoreszierenden Schaum.
³¹P NMR (CDCl₃): - 13,1 ppm - ¹H NMR: 4,99 (d, ²J_{PH} = 6 Hz, 1 H, CHP), 6,90 (d, J_{PH} = 6 Hz, 1 H, = CH), 7,0 - 7,53 (m, 23 H, Harom).

### Beispiel 5: Synthese von 5-Diallyloxophosphoranyl-dibenzo[a,d]cyclohepten (troppo^{allyl})

Zu einer Lösung von 50 mg 5-Dichlorooxophosphoranyl-dibenzo[a,d]cyclohepten, das analog zu Beispiel 1 hergestellt wurde (0,2 mmol) in 1 mL THF werden 0,2 mL Allylmagnesiumchlorid (2 M in THF) gegeben. Die Reaktionsmischung wird rot-braun. Nach 1 h bei Raumtemperatur wird die Reaktionsmischung mit wässriger Ammoniumchloridlösung versetzt und die organische Phase abgetrennt. Die wässrige Phase wird mit CH₂Cl₂ extrahiert und die vereinten organischen Phasen über MgSO₄ getrocknet. Nach Abziehen des Lösungsmittels erhält man 5-Diallyloxophosphoranyl-dibenzo[a,d]cyclohepten als farblosen Feststoff.
³¹P NMR (CDCl₃): 45,8 ppm - ¹H NMR: 2,44 (dd, ²J_{PH} = 14,5 Hz, ³J_{HH} = 7,6 Hz, 2 H, CH₂), 4,49 (d, ²J_{PH} = 16,2 Hz, 1 H, CHP).

### Beispiel 6 Synthese von 5-Diallylphosphanyl-dibenzo[a,d]cyclohepten (tropp^{allyl})

Analog zu Beispiel 4 wird 5-Diallyloxophosphoranyl-dibenzo[a,d]cyclohepten mit HSiCl₃ in Toluol innerhalb von 2 h quantiativ zu 5-Diallylphosphanyl-dibenzo[a,d]cyclohepten reduziert.
³¹P NMR (CDCl₃): -28.1 ppm.

## Patentansprüche

1. Verfahren zur Herstellung von Verbindungen der Formel (I), 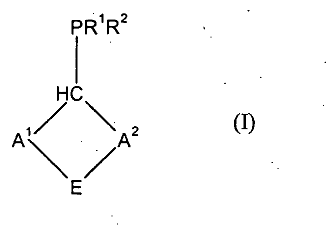 in der
R¹ und R² jeweils unabhängig voneinander für einen monovalenten Rest stehen, der jeweils 1 bis 30-Kohlenstoffatome enthält oder
PR¹R² als Ganzes für einen 5 bis 9 gliedrigen heterocyclischen Rest steht, der insgesamt 2 bis 50 Kohlenstoffatome enthält und bis zu drei weitere Heteroatome enthalten kann, die ausgewählt sind aus der Gruppe Sauerstoff und Stickstoff und
A¹ und A² jeweils unabhängig voneinander für einen subsituierten oder unsubstituierten ortho-Arylen-Rest stehen und
E für E¹ oder E² steht, wobei E¹ für einen unsubstituierten, einfach oder zweifach substituierten vicinalen cis-Alkendiyl-Rest und E² für einen vicinalen Alkandiyl-Rest steht, bei dem die beiden -yl-Kohlenstoffatome jeweils ein oder zwei Wasserstoffatome tragen,
**dadurch gekennzeichnet, dass**
• in einem Schritt a)
Verbindungen der Formel (II) 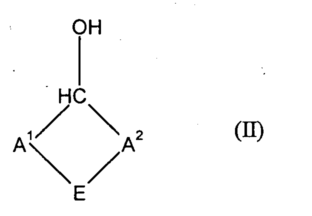 in der A¹, A² und E die vorstehend angegebenen Bedeutung besitzen durch Umsetzung mit Verbindungen der Formel (III)
R¹R²P-Hal (III)
in der R¹ und R² die vorstehend angegebene Bedeutung besitzen und
Hal¹ für Chlor, Brom oder Iod, bevorzugt für Chlor steht
in Gegenwart von Säure oder Base
zu Verbindungen der Formel (IV) umgesetzt werden 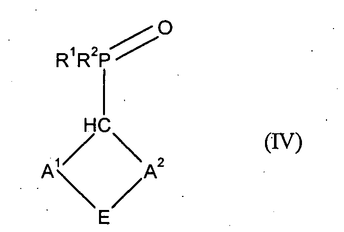 in der A¹, A², E, R¹ und R² die vorstehend angegebene Bedeutung besitzen und
• in einem Schritt b) die Verbindungen der Formel (IV) durch Reduktion in Verbindungen der Formel (I) überführt werden.

2. Verfahren nach Anspruch 1, **dadurch gekennzeichnet, dass** R¹ und R² jeweils unabhängig voneinander für C₁-C₁₈-Alkyl, C₃-C₁₂-Alkenyl, C₁-C₁₈-Perfluoralkyl, C₁-C₁₈-Perfluoralkoxy, C₁-C₁₈-Alkoxy, C₅-C₂₄-Aryl, C₅-C₂₄-Aryloxy, C₅-C₂₅-Arylalkyl, C₅-C₂₅-Arylalkoxy oder NR⁴R⁵ stehen, wobei R⁴ und R⁵ jeweils unabhängig voneinander für C₁-C₁₂-Alkyl, C₅-C₁₄-Aryl oder C₆-C₁₅-Arylalkyl oder NR⁴R⁵ als Ganzes für einen 5 bis 7 gliedrigen cyclischen Aminorest mit insgesamt 4 bis 12 Kohlenstoffatomen steht oder
PR¹R² als Ganzes für einen 5- bis 7-gliedrigen heterocyclischen Rest der Formel (V) steht, 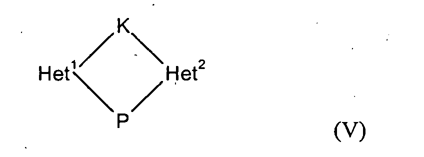 in der
Het¹ und Het² jeweils unabhängig voneinander fehlen, für Sauerstoff oder NR⁵ stehen, wobei R⁵ für C₁-C₁₂-Alkyl, C₅-C₁₄-Aryl oder C₆-C₁₅-Arylalkyl steht und
K für einen Alkandiylrest mit 2 bis 25 Kohlenstoffatomen, einen divalenten Aryl-Alkyl-Rest mit 5 bis 15 Kohlenstoffatomen, einen Arylen-Rest mit insgesamt 5 bis 14 Kohlenstoffatomen oder einen 2,2'-(1,1'-Bisarylen)Rest mit insgesamt 10 bis 30 Kohlenstoffatomen steht.

3. Verfahren nach mindestens einem der Ansprüche 1 bis 2, **dadurch gekennzeichnet, dass** A¹ und A² jeweils unabhängig voneinander für einen ortho-Phenylen-Rest der Formel (VI) stehen, 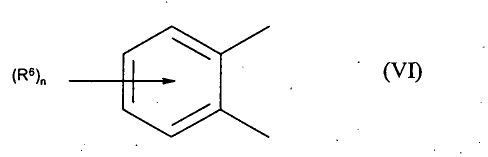 in der
n für 0, 1, 2, 3 oder 4 bevorzugt 0, 1 oder 2 und besonders bevorzugt 0 oder 1 steht und
R⁶ jeweils unabhängig ausgewählt ist aus der Gruppe Fluor, Chlor, Brom, Iod, Nitro, freies oder geschütztes Formyl, C₁-C₁₂-Alkyl, C₁-C₁₂-Alkoxy, C₁-C₁₂-Halogenalkoxy, C₁-C₁₂-Halogenalkyl, C₅-C₁₄-Aryl, C₆-C₁₅-Arylalkyl oder Resten der Formel (VII),
L-Q-T-W (VII)
in der unabhängig voneinander
L fehlt oder für C₁-C₈-Alkylen oder C₂-C₈-Alkenylen steht und
Q fehlt oder für Sauerstoff, Schwefel oder NR⁷ steht, wobei
R⁷ Wasserstoff, C₁-C₈-Alkyl, C₆-C₁₅-Arylalkyl oder C₅-C₁₄-Aryl bedeutet und
T für eine Carbonyl-Gruppe steht und
W für R⁸, OR⁸, NHR⁹ oder N(R⁹)₂ steht,
wobei
R⁸ für C₁-C₈-Alkyl, C₅-C₁₅-Arylalkyl oder C₅-C₁₄-Aryl und
R⁹ jeweils unabhängig für C₁-C₈-Alkyl, C₅-C₁₄-Arylalkyl oder C₄-C₁₅-Aryl oder N(R⁹)₂ zusammen für einen 5- oder 6-gliedrigen cyclischen Aminorest steht
oder Resten der Formeln (VIIIa-g)
| | |
|---|---|
| L-W (VIIIa) | L-SO₂-W (VIIIb) |
| L-NR¹²SO₂R¹² (VIIIc) | L-SO₃Z (VIIId) |
| L-PO₃Z₂ (VIIIe) | L-COZ (VIIIf) |
| L-CN (VIIIg) | |
in denen L, Q, W und R⁸ die unter der Formel (VII) angegebene Bedeutung besitzen und Z für Wasserstoff oder M¹ steht, wobei M¹ die unter der Definition von R⁷ angegebene Bedeutung besitzt.

4. Verfahren nach mindestens einem der Ansprüche 1 bis 3, **dadurch gekennzeichnet, dass** E für Reste der Formeln (IXa) oder (IXb) steht, wobei in Formel (IXa) 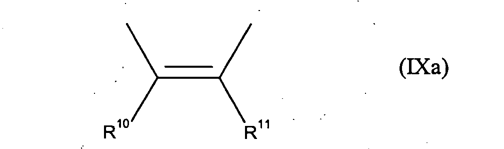
R¹⁰ und R¹¹ jeweils unabhängig voneinander für Wasserstoff, Cyano, Fluor, Chlor, Brom, Iod, C₁-C₁₈-Alkyl, C₄-C₂₄-Aryl, C₅-C₂₅-Arylalkyl, CO₂M, CONH₂, SO₂N(R¹²)₂, SO₃M¹ wobei R¹² jeweils unabhängig die nachfolgend definierte Bedeutung besitzt oder für Reste der Formel (X) stehen,
T²-Het³-R¹³ (X)
in der
T² fehlt oder für Carbonyl,
Het³ für Sauerstoff oder NR¹², wobei R¹² für Wasserstoff, C₁-C₁₂-Alkyl, C₅-C₁₄-Aryl oder C₆-C₁₅-Arylalkyl steht und
R¹³ für C₁-C₁₈-Alkyl, C₅-C₂₄-Aryl oder C₅-C₂₅-Arylalkyl steht
und in Formel (IXb), 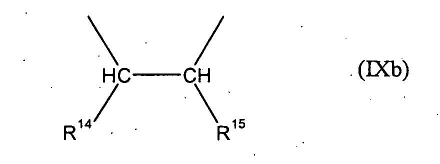
R¹⁴ und R¹⁵ jeweils unabhängig voneinander für Wasserstoff, C₁-C₁₈-Alkyl, C₅-C₂₄-Aryl öder C₅-C₂₅-Arylalkyl stehen.

5. Verfahren nach mindestens einem der Ansprüche 1 bis 4, **dadurch gekennzeichnet, dass** 10-Cyano-5-diphenylphosphanyl-5*H*-dibenzo[a,d]cyclohepten (^{CN}tropp^{Ph}) 5-(2S,5S-2,5-dimethyl-phospholanyl)-5*H*-dibenzo[a,d]cyclohepten (S,S-tropphos^{Me}) 5-(2R,SR-2,5-dimethyl-phospholanyl)-5*H*-dibenzo[a,d]cyclohepten (R,R-tropphos^{Me}) (10-Methoxy-*5H* dibenzo[a,d]cyclohepten-5-yl)-diphenylphosphan (^{MeO}tropp^{Ph}) (10-Methoxy-*5H*-dibenzo[a,d]cyclohepten-5-yl)-dicyclohexylphosphan (^{MeO}tropp^{Cyc}) [(5S)-10-[(-)-Menthyloxy]-*5H*-dibenzo[a,d]cyclohepten-5-yl]-diphenylphosphan, (S-^{Menthyloxy}tropp^{Ph}) und [(5R)-10-[(-)-Menthyloxy]-*5H*-dibenzo[a,d]cyclohepten-5-yl]-diphenylphosphan (R-^{Menthyloxy}tropp^{Ph}) hergestellt werden.

6. Verfahren nach mindestens einem der Ansprüche 1 bis 5, **dadurch gekennzeichnet, dass** für Schritt a) Säuren eingesetzt werden.

7. Verfahren nach mindestens einem der Ansprüche 1 bis 6, **dadurch gekennzeichnet, dass** als Säuren solche eingesetzt werden, die bezogen auf eine wässrige Bezugsskala und 25°C einen pKs-Wert von 5,5 oder weniger besitzen.

8. Verfahren nach mindestens einem der Ansprüche 1 bis 7, **dadurch gekennzeichnet, dass** Schritt a) bei einer Temperatur von -20°C bis 100°C durchgeführt wird.

9. Verfahren nach mindestens einem der Ansprüche 1 bis 8, **dadurch gekennzeichnet, dass** im Falle des Vorliegens von Stereoisomerengemischen von Verbindungen der Formel (IV) diese vor Durchführung des Schrittes b) getrennt werden.

10. Verfahren nach mindestens einem der Ansprüche 1 bis 9, **dadurch gekennzeichnet, dass** zumindest einer der Reste R¹, R², A¹, A² und E in den Verbindungen der Formel (IV) in einen anderen Rest R¹, R², A¹, A² und E überführt wird.

11. Verfahren nach mindestens einem der Ansprüche 1 bis 10, **dadurch gekennzeichnet, dass** die Reduktion in Schritt b) in Gegenwart von Siliziumwasserstoffverbindungen durchgeführt wird.

12. Verfahren nach mindestens einem der Ansprüche 1 bis 11, **dadurch gekennzeichnet, dass** die Reduktion in Schritt b) bei einer Temperatur von 20°C bis 200°C durchgeführt wird.

13. Verfahren nach mindestens einem der Ansprüche 1 bis 12, **dadurch gekennzeichnet, dass** die erhaltenen Verbindungen in einem weiteren Schritt zu den freien Phosphanen reduziert werden.

14. Verbindungen der Formel (IVa) 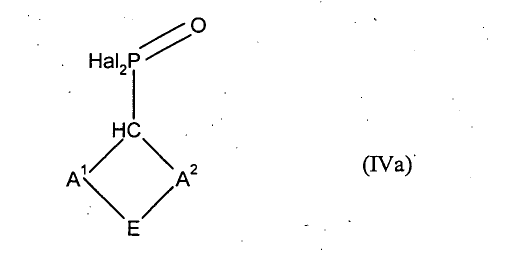 in der A¹, A² und E die in Anspruch 1 genannten Bedeutungen besitzen.

15. 5-Dichloroxyphosphoryl-5*H*-dibenzo[a,d]cyclohepten (troppo^{Cl}) und 5-Dibromoxyphosphoryl-5*H*-dibenzo[a,d]cyclohepten (troppo^{Br}).

16. Verfahren zur Herstellung von Verbindungen der Formel (IVa) 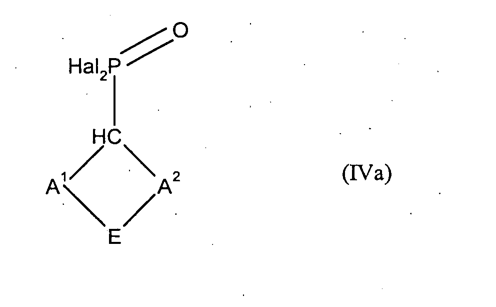 in der A¹, A² und E die in Anspruch 1 genannten Bedeutungen besitzen und
Hal jeweils unabhängig für Chlor, Brom oder Iod steht,
**dadurch gekennzeichnet, dass**
Verbindungen der Formel (II) mit der in Anspruch 1 genannten Bedeutung in Gegenwart von Säure oder Base
mit Verbindungen der Formel (IIIa) umgesetzt werden,
PHal₃ (IIIa)
in der
Hal jeweils unabhängig für Chlor, Brom oder Iod steht.

17. Verfahren nach Anspruch 16, **dadurch gekennzeichnet, dass** die Verbindungen der Formel (IVa) weiterhin mit Verbindungen der Formel (XII) umgesetzt werden,
R^{1/2}-M (XII)
in der R¹ bzw. R² die in Anspruch 1 genannte Bedeutung besitzen und M für den Fall, dass
• R¹ bzw. R² über ein Sauerstoffatom an das Phosphoratom gebunden werden sollen für Wasserstoff oder 1/n Äquivalente eines Metalls oder eines Metallfragments mit der Wertigkeit n und für den Fall, dass
• R¹ bzw. R² über ein Stickstoffatom an das Phosphoratom gebunden werden sollen für Wasserstoff und für den Fall, dass
• R¹ bzw. R² über ein Kohlenstoffatom an das Phosphoratom gebunden werden sollen für 1/n Äquivalente eines Metalls oder eines Metallfragments mit der Wertigkeit n steht,
wobei das Gleiche in analoger Weise für Reste gilt, in denen R¹R² als Ganzes für einen divalenten Rest steht.

18. Verfahren nach Anspruch 17, **dadurch gekennzeichnet, dass** die erhaltenen Verbindungen in einem weiteren Schritt zu den freien Phosphanen reduziert werden.

19. Verwendung von Verbindungen nach mindestens einem der Ansprüche 14 bis 15 und Verbindungen, die nach mindestens einem der Ansprüche 1 bis 13 oder 16 bis 17 hergestellt wurden, als Liganden für Metalle und zur Anwendung in katalytischen Prozessen.

20. Verwendung nach Anspruch 19, **dadurch gekennzeichnet, dass** die katalytischen Prozesse Hydrierungen und Hydrosilylierungen sind.
